# EUROPÄISCHE PATENTSCHRIFT

(11) **EP 2 229 703 B1**
(45) Veröffentlichungstag und Bekanntmachung des Hinweises auf die Patenterteilung: **02.09.2015**
(21) Anmeldenummer: 08859086.4
(22) Anmeldetag: 09.12.2008
(51) Int. Cl.: H01M 8/10

(54) **BRENNSTOFFZELLE, PROTONEN LEITENDE MEMBRAN, MEMBRAN-ELEKTRODEN- EINHEIT, VERWENDUNGEN VON IONOMEREN UND KIT**
FUEL CELL, PROTON EXCHANGE MEMBRANE, MEMBRANE-ELECTRODE ASSEMBLY, USES OF IONOMERS, AND KIT
PILE À COMBUSTIBLE, MEMBRANE CONDUCTRICE DE PROTONS, ENSEMBLE MEMBRANE-ÉLECTRODES, UTILISATIONS DE IONOMÈRES ET KIT

(30) Priorität: 09.12.2007 DE 102007060719
(43) Veröffentlichungstag der Anmeldung: 22.09.2010
(73) Patentinhaber: FuMA-Tech Gesellschaft für funktionelle Membranen- und Anlagentechnologie mbH, 66386 St. Ingbert/Saar (DE)
(72) Erfinder: BAUER, Bernd, 71665 Vaihingen an der Enz (DE); JESKE, Michael, 66606 Sankt Wendel (DE); RISCHER, Norbert, 74312 Bietigheim-Bissingen (DE); SCHUSTER, Michael, 66299 Friedrichsthal (DE); ZHANG, Wei, 66386 St. Ingbert (DE)
(74) Vertreter: Patentanwälte Ruff, Wilhelm, Beier, Dauster & Partner
(86) Internationale Anmeldenummer: PCT/EP2008/010425
(87) Internationale Veröffentlichungsnummer: WO 2009/074282

(56) Entgegenhaltungen:
- WO-A-2007/074616
- US-A- 5 350 643
- US-A1- 2006 083 971

## Beschreibung

Die Erfindung betrifft eine Brennstoffzelle mit einer Protonen leitenden Membran aus einem acide Gruppen aufweisenden lonomer.

Die Polymer-Elektrolyt-Membran-Brennstoffzellen (Proton Electrolyte Membrane Fuel Cell, PEMFC) werden wegen ihres theoretisch erzielbaren hohen Wirkungsgrades und der schadstoffarmen Technik als besonders zukunftsträchtige Energiequelle eingeschätzt. Eine PEM-Brennstoffzelle besteht gewöhnlich aus zwei Elektroden, die durch eine Protonen leitende Membran (Polymer Electrolyte Membran oder Protone Exchange Membran) voneinander separiert sind. Auf die Elektroden sind gewöhnlich noch Gasdiffusionslagen aufgelegt. Diese kombinierte Anordnung wird als sogenannte Membran-Elektroden-Einheit bezeichnet (Membrane Elektrode Assembly, MEA). Die MEA stellt die zentrale Komponente des oben genannten Brennstoffzelltyps dar. Innerhalb der MEA kommt wiederum der Protonen leitenden Membran eine Schlüsselrolle zu. Sie transferiert die auf der Anodenseite durch Oxidation des Brennstoffes, gewöhnlich Wasserstoff, erzeugten Protonen auf die Kathodenseite. Dort rekombinieren diese Protonen mit dem auf der Kathodenseite umgesetzten Oxidationsmittel, gewöhnlich Sauerstoff, und den über einen geeigneten Verbraucher gewanderten Elektronen zu Wasser. Insgesamt gewährleistet die Protonen leitende Membran daher, dass der Stromkreislauf in der Brennstoffzelle geschlossen bleibt, indem die Membran die ionische Leitfähigkeit in der Brennstoffzelle herstellt. Der Protonentransfer durch die Membran erfolgt in der Regel unter Mitwirkung von im Membranmaterial enthaltenen sauren Gruppen. Der Protonenleitmechanismus funktioniert jedoch nur bei ausreichender Anwesenheit von Wasser in der Membran.

Problematisch ist jedoch, dass konventionelle PEMFCs mit längerer Betriebsdauer zunehmend an Wasser verlieren. Dies ist zum einen erhöhten Betriebstemperaturen geschuldet, die bei PEMFCs durchaus in einem Bereich zwischen 90 und 130 °C liegen können. Zum anderen "schleppen" die Protonen bei ihrer Wanderung durch die Membran stets auch etwas Wasser mit, wodurch die Membran beginnend von der Anodenseite auszutrocknen droht. Mit zunehmendem Wasserverlust erhöht sich jedoch der Widerstand in der Brennstoffzelle, wodurch deren Leistung insgesamt sinkt.

Damit Protonen leitende Membranen möglichst effizient in Brennstoffzellen eingesetzt werden können, müssen die Membranmaterialien mit kostenintensiven Befeuchtungsaggregaten befeuchtet werden. Ein weiterer Nachteil besteht darin, dass während des Befeuchtungsvorganges eine Kondensation des Befeuchtungswassers möglichst vermieden werden muss, da Wassertropfen den Ablauf von Brennstoffzellen beeinträchtigen können.

Die US 5,350,643 offenbart eine Brennstoffzelle, wobei die Katalysatorschicht der Anode ein größeres Wasserabweisungsvermögen aufweist als die Katalysatorschicht der Kathode.

Die US 2006/0083971 A1 offenbart Membran-Elektroden-Einheiten, welche an der Anode einen höheren EW (equivalent weight) aufweisen als an der Kathode.

Die nachveröffentlichte WO 2007/074616 A1 offenbart eine Membran-Elektroden-Einheit, welche einen Gradienten in Bezug auf hydrophile Substituenten aufweist.

Die vorliegende Erfindung stellt sich daher die Aufgabe, eine Brennstoffzelle bereitzustellen, welche aus dem Stand der Technik bekannte Probleme vermeidet. Die Brennstoffzelle soll insbesondere in kritischen Temperaturbereichen ohne wesentliche Einbußen im Wirkungsgrad über einen längeren Zeitraum in Betrieb genommen werden können.

Diese Aufgabe wird erfindungsgemäß gelöst durch eine Brennstoffzelle mit Elektroden in Form einer Anode und einer Kathode, zwischen denen eine Protonen leitende Membran aus einem acide Gruppen aufweisenden Ionomer angeordnet ist, die Wasser anzuziehen vermag, das an die aciden Gruppen bindet, wobei zwischen dem Bereich der Anode und dem Bereich der Kathode ein Gradientenprofil in Bezug auf das Wasseranziehungsvermögen des Ionomers ausgebildet ist, derart, dass das Wasseranziehungsvermögen im Anodenbereich größer ist als im Kathodenbereich.

Durch die Erfindung wird eine Brennstoffzelle, insbesondere eine Polymer-Elektrolyt-Membran-Brennstoffzelle (Proton Electrolyte Membrane Fuel Cell, PEMFC), mit einem Gradientenprofil bezüglich des Wasseranziehungsvermögens eines Protonen leitenden Ionomers bereitgestellt. Das Gradientenprofil erstreckt sich vorzugsweise über die gesamte Membran-Elektroden-Einheit (MEA) der Brennstoffzelle. Das Gradientenprofil sorgt mit besonderem Vorteil für einen ausreichenden Wassergehalt während der Betriebnahme der Brennstoffzelle und unterstützt insbesondere die Rückdiffusion des in der Membran vorhandenen Wassers von der Kathode zur Anode. Dadurch wird der auf Wasser beruhende Protonentransfer durch die Membran aufrecht erhalten. Dies trägt insgesamt zu einem stabileren Lauf der Brennstoffzelle bei und erhöht zudem in vorteilhafter Weise ihre Leistung. Dies ist vor allem bei erhöhten Betriebstemperaturen von Vorteil, bei denen Membranen konventioneller Systeme gewöhnlich trocken fallen. Ein besonderer Vorteil der erfindungsgemäßen Brennstoffzelle besteht daher gerade darin, dass sie auch bei kritischen Temperaturbereichen, insbesondere zwischen 90 und 130 °C, und insbesondere mit einer zum Teil deutlich reduzierten relativen Feuchte betrieben werden kann.

Das Gradientenprofil ist durch unterschiedliche hydrophile und hydrophobe Eigenschaften des Ionomers ausgebildet. Die Membran weist auf ihrer Anodenseite eine größere Hydrophilie auf als an ihrer Kathodenseite. Anders ausgedrückt, die Membran ist an ihrer Kathodenseite mit besonderem Vorteil hydrophober ausgebildet als an ihrer Anodenseite.

Die Unterschiede im Wasseranziehungsvermögen sind mindestens zum Teil durch einen unterschiedlichen Gehalt an aciden Gruppen im Ionomer ausgebildet. Hierbei können auch verschiedene acide Gruppen kombiniert sein. Als acide Gruppen kommen grundsätzlich Carboxy-, Phosphonsäure- und/oder Sulfonsäuregruppen in Betracht, wobei Sulfonsäuregruppen besonders bevorzugt sind. Die Säuregruppen binden das in der Membran enthaltene Wasser. Durch einen höheren Gehalt an aciden Gruppen im Anodenbereich und einen niedrigeren Gehalt an aciden Gruppen im Kathodenbereich können mehr Wassermoleküle in Richtung Anode als in Richtung "Kathode" gesaugt werden.

In einer weitergehenden Ausführungsform sind die Unterschiede im Wasseranziehungsvermögen mindestens zum Teil durch die Hydrophilie und/oder Hydrophobie des Ionomers beeinflussende Zusätze zu den Ionomeren bewirkt. Beispielsweise können die Ionomere auf der Anodenseite hydrophile Zusätze, insbesondere Zeolithe, und die Ionomere auf der Kathodenseite hydrophobe Zusätze, insbesondere Teflon, aufweisen.

Vorzugsweise sind in die Membran, insbesondere in deren unterschiedlichen Schichten, Metallkomplexe integriert, welche durch katalytische Wirkung eine zusätzliche Wassererzeugung katalysieren. Die Metallkomplexe sind vorzugsweise kovalent an das lonomer, insbesondere an Polymermoleküle davon, gebunden. Die Metallkomplexe können insbesondere in das lonomer eingebettet sein. Die Metallkomplexe können die typischerweise bei der Beschichtung oder Bedampfung von Elektroden zum Einsatz kommenden Übergangsmetalle aufweisen. Beispiele sind Platin, Rhuthenium, Nickel, Cobalt, Chrom und Gemische davon, insbesondere Platin-Ruthenium-Gemische, Platin-Nickel-Gemische und Platin-Cobalt-Gemische. Bei den Metallkomplexen kann es sich weiterhin um Komplexe auf Siloxanbasis handeln. Bevorzugt sind die Metallkomplexe über geeignete funktionelle Gruppen, beispielsweise Hydroxygruppen, Halogenatome und dergleichen, kovalent an die Polymermoleküle des Ionomers gebunden. Durch die kovalente Bindung sind die Metallkomplexe mit besonderem Vorteil fest und insbesondere degradationsbeständig in die Membran eingebunden.

Grundsätzlich kommen für das Ionomer alle Polymere in Betracht, die acide Gruppen oder Substituenten tragen. Beispielsweise kann das Ionomer ein siliziumorganisches Polymer sein. Das Ionomer kann insbesondere als Mischung oder Kombination verschiedener Ionomere, insbesondere als lonomerblend, vorliegen.

Erfindungsgemäß ist es vorgesehen, dass das Ionomer ausgewählt ist aus der Gruppe sulfonierte Polysulfone (s-PS), sulfonierte Polysulfidsulfone (s-PSS), sulfonierte Polyetherketone (s-PEK), sulfonierte Polyetheretherketone (s-PEEK), sulfonierte Polyetherketonketone (s-PEKK), sulfonierte Polyetheretherketonketone (s-PEEKK) und Kombinationen davon. Sulfonierte Polysulfone (s-PS) und/oder sulfonierte Polysulfidsulfone (s-PSS) sind erfindungsgemäß besonders bevorzugt. Alternativ ist das Ionomer ein Perfluorosulfonsäurepolymer.

Die Herstellung der in den vorherigen Abschnitten genannten Ionomere ist dem Fachmann bekannt. Beispielsweise wird für die Herstellung von sulfonierten Polyetherketonketonen (s-PEKK) auf die EP 1 373 364 B1 verwiesen, deren Offenbarungsgehalt insoweit durch Bezugnahme zum Inhalt dieser Beschreibung gemacht wird.

Das Gradientenprofil kann kontinuierlich und/oder diskontinuierlich ausgebildet sein. Erfindungsgemäß kann das Gradientenprofil insbesondere kontinuierlich ausgebildet sein. Das Wasseranziehungsvermögen nimmt in der Membran von der Anodenseite der Membran zu ihrer Kathodenseite, vorzugsweise kontinuierlich, ab.

In einer bevorzugten Ausführungsform erstreckt sich das Gradientenprofil zwischen den Elektroden. Auf diese Weise kann der bereits beschriebene Wasserzug in Richtung auf die Anodenseite zusätzlich verstärkt werden. Insbesondere erstreckt sich das Gradientenprofil in der Membran, d.h. zwischen den Oberflächen der Membran durch die Membran.

Die Membran weist bei einer weiteren Ausführungsform mindestens zwei, insbesondere zwei bis zehn, Schichten auf. Die Membran kann daher als Mehrschichtmembran, zum Beispiel als sogenannte Bilayer- oder Trilayer-Membran, vorliegen. Die Schichten besitzen vorzugsweise ein verschiedenes Wasseranziehungsvermögen, insbesondere verschiedene Beladungsdichten bezüglich der aciden Gruppen. Die Membran kann eine Dicke zwischen 20 und 50 µm aufweisen. Zur Herstellung der Schichtmembran kann eine Dispersion, insbesondere Lösung, des Ionomers auf eine geeignete Unterlage, beispielsweise auf eine PET-Folie (Polyethylenterephthalat-Folie), aufgebracht werden. Nach einem gegebenenfalls erforderlichen Trocknungsschritt kann eine weitere Dispersion des Ionomers aufgebracht und anschließend gegebenenfalls erneut getrocknet werden. Diese Schritte können mehrmals wiederholt werden, wobei bei jedem Beschichtungsschritt vorzugsweise ein Ionomer mit einem anderen Gehalt an aciden Gruppen verwendet wird. Dadurch können einzelne Schichten der fertigen Membran unterschiedliche Beladungsdichten im Hinblick auf die aciden Gruppen aufweisen. Somit lässt sich das Gradientenprofil in besonders einfacher Weise erzeugen.

Die Membran ist gewöhnlich beidseitig mit einer katalytisch aktiven Elektrode (Elektrokatalysatorschicht) versehen. Bei der Elektrode handelt es sich meistens um eine Mischung aus einem geeigneten Trägermaterial, beispielsweise Kohlenstoff, insbesondere in Form von Ruß, und einem geeigneten Katalysator. Der Katalysator kann beispielsweise auf das Trägermaterial aufgedampft sein. Weiterhin kann der Katalysator in Form einer Paste oder Dispersion auf das Trägermaterial aufgetragen, beispielsweise aufgerakelt, sein. Auf die Elektroden sind gewöhnlich noch Gasdiffusionslagen aufgelegt. Diese kombinierte Anordnung aus Trägermaterial, Katalysator und Gasdiffusionslagen kann mit der Protonen leitenden Membran zu der bereits mehrfach erwähnten Membran-Elektroden-Einheit (MEA) verbunden sein. Als Katalysatoren kommen neben den bereits an anderer Stelle erwähnten Übergangsmetallen auch Übergangsmetalllegierungen, beispielsweise Platinlegierungen, in Betracht. Die Schichtdicke der Elektroden kann maximal ca. 15 µm betragen. Bevorzugt ist die Elektrodenschichtdicke < 15 µm, insbesondere ≤ 2 µm.

Erfindungsgemäß kann es weiterhin vorgesehen sein, dass die Elektroden Protonen leitende Ionomere, insbesondere Ionomere mit aciden Gruppen, aufweisen. Bevorzugt weisen die Elektroden selbst ein Gradientenprofil in Bezug auf das Wasseranziehungsvermögen eines Ionomers auf. Bevorzugt weisen die Ionomere der Anode ein größeres Wasseranziehungsvermögen auf als die Ionomere der Kathode. Dies kann, wie bereits beschrieben, auf unterschiedlichen hydrophilen bzw. hydrophoben Eigenschaften der Ionomere beruhen. Vorzugsweise beruhen die Unterschiede auf einem unterschiedlichen Gehalt an aciden Gruppen der Anoden- und Kathodenionomere. Erfindungsgemäß kann es sogar vorgesehen sein, dass das Gradientenprofil in den Elektroden jeweils stärker ausgebildet ist als in der Membran. Die Elektroden können insbesondere mehrere Schichten von Protonen leitenden Ionomeren aufweisen, wobei die Schichten bevorzugt ein verschiedenes Wasseranziehungsvermögen besitzen. Bezüglich weiterer Eigenschaften und Einzelheiten zu den Ionomeren wird auf die bisherige Beschreibung Bezug genommen.

In einer bevorzugten Ausführungsform weisen die Elektroden Katalysatorpartikel auf, die in ein Ionomer eingebettet sind. Bei den Katalysatorpartikeln kann es sich beispielsweise um Agglomerate aus Übergangsmetallen und geeigneten Trägermaterialien, beispielsweise Kohlenstoff, handeln. Die Übergangsmetalle weisen gewöhnlich einen Durchmesser im Nanometerbereich auf. Beispielsweise kann der Durchmesser zwischen 3 und 10 nm, insbesondere bei ca. 5 nm, liegen. Die Trägermaterialien selbst können in partikulärer Form vorliegen. Im Falle von Kohlenstoff kann das Trägermaterial auch in Form von Nanotubes vorliegen. Der Durchmesser von Partikeln des Trägermaterials kann sich vom Nanometerbereich bis in den Mikrometerbereich erstrecken. Die Katalysatorpartikel können in das Ionomer, insbesondere in lonomerpartikel, eingebettet sein. Die lonomerpartikel können einen Durchmesser zwischen 40 und 100 µm oder größer aufweisen.

Den Elektroden sind bei einer weiteren Ausführungsform Gasdiffusionslagen zugeordnet. Bei den Gasdiffusionslagen kann es sich insbesondere um vliesartige Materialien, beispielsweise Kohlenstoffpapier, handeln. Die Gasdiffusionslagen sorgen in vorteilhafter Weise für eine möglichst gleichmäßige Verteilung der Reaktandengase auf der Membran-Elektroden-Einheit und für die Abnahme der Elektronen aus der Elektrokatalysatorschicht.

Besonders bevorzugt erstreckt sich das Gradientenprofil zwischen den Gasdiffusionslagen der Brennstoffzelle.

In einer weitergehenden Ausführungsform weisen die Gasdiffusionslagen Protonen leitende Ionomere, insbesondere Ionomere mit aciden Gruppen, auf. Vorzugsweise weisen die Gasdiffusionslagen selbst ein Gradientenprofil bezüglich des Wasseranziehungsvermögens eines Ionomers auf. Erfindungsgemäß kann es zum Beispiel vorgesehen sein, dass die Gasdiffusionslagen ein poröses Gerüst aus Ionomer aufweisen. Bevorzugt besitzt das Ionomer der der Anode zugeordneten Gasdiffu-sionslage ein größeres Wasseranziehungsvermögen als das Ionomer der der Kathode zugeordneten Gasdiffusionslage. Die Gasdiffusionslagen können insbesondere mehrere Schichten von Protonen leitenden Ionomeren aufweisen, wobei die Schichten bevorzugt ein verschiedenes Wasseranziehungsvermögen besitzen. Bezüglich weiterer Einzelheiten und Merkmale zu den Ionomeren wird auf die bisherige Beschreibung verwiesen. In einer weiteren Ausführungsform weisen die Gasdiffusionslagen selbst Elektrokatalysatorschichten auf, d.h. die Gasdiffusionslagen sind in dieser Ausführungsform als Gasdiffusionselektroden ausgebildet. Die Gasdiffusionslagen können grundsätzliche eine Dicke zwischen 120 und 350 µm aufweisen.

Gemäß einer besonders bevorzugten Ausführungsform weist die Brennstoffzelle, insbesondere Bauteile davon, Ionomere mit unterschiedlichen Äquivalentgewichten (EW) an aciden Gruppen, bezogen auf das jeweilige Ionomer, auf. Beispielsweise können Schichten von Gasdiffusionslagen an der Anodenseite Ionomere mit einem Äquivalentgewichts-Wert (EW-Wert) zwischen 800 und 850 aufweisen und an der Kathodenseite Ionomere mit einem EW-Wert zwischen 1050 und 1100. Der EW-Wert verhält sich dabei in etwa umgekehrt proportional zum Gehalt an aciden Gruppen, insbesondere Sulfonsäuregruppen. Die Einstellung solcher EW-Werte an sich ist dem Fachmann bekannt, so dass auf weitere Ausführungen hierzu verzichtet wird. Das Gradientenprofil, ausgedrückt in Äquivalentgewichten (EW) an aciden Gruppen, insbesondere Sulfonsäuregruppen, weist eine Äquivalentsgewichtsdifferenz von mindestens 10 %, insbesondere mindestens 20 %, bezogen auf das Ionomer mit niedrigerem Äquivalentgewicht, auf.

Die erfindungsgemäße Brennstoffzelle liegt bei einer weiteren Ausführungsform in Form eines Brennstoffzellstapels, eines sogenannten Stacks, vor. Auf diese Weise können in bequemer Weise technisch nutzbare Spannungen erzeugt werden.

Weitere Einzelheiten und Merkmale der Erfindung ergeben sich aus der nachfolgenden Beschreibung bevorzugter Ausführungsformen anhand der Figurenbeschreibung in Kombination mit den Figuren und Unteransprüchen. In diesen Ausführungsformen können einzelne Merkmale der Erfindung allein oder in Kombination mit anderen Merkmalen verwirklicht sein. Sämtliche Figuren werden hiermit durch ausdrückliche Bezugnahme zum Inhalt dieser Beschreibung gemacht.

In den Figuren zeigen:
- Figur 1 :: den Aufbau einer Membran-Elektroden-Einheit (MEA) einer PEMFC,
- Figur 2:: die Polarisationskurve einer MEA mit Gradientenprofil und einer MEA ohne Gradientenprofil.

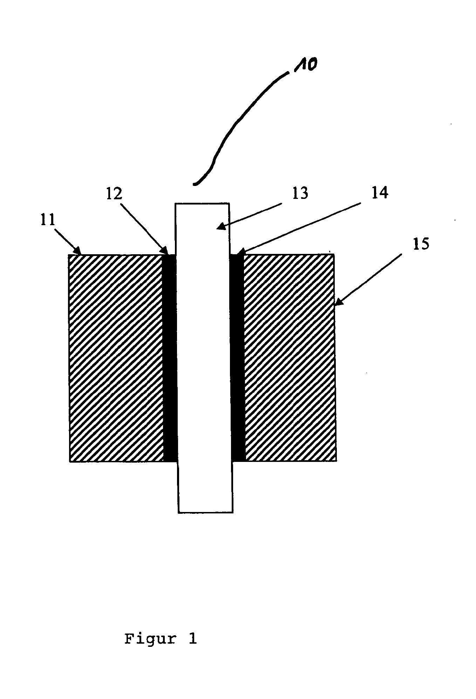

Figur 1 zeigt schematisch eine Membran-Elektroden-Einheit 10 (Membrane Electrode Assembly, kurz MEA). Sie bildet das Kernstück einer Polymer-Elektrolyt-Membran-Brennstoffzelle (PEMFC). Die MEA weist anoden- und kathodenseitig jeweils eine Gasdiffusionslage 11 ;15 auf. Die Gasdiffusionslage 11 ist auf die Anode 12 und die Gasdiffusionslage 15 auf die Kathode 14 aufgebracht. Zwischen den Elektroden 12;14 ist die Protonen leitende Membran 13 angeordnet. Erfindungsgemäß ist es besonders vorteilhaft, wenn sich zwischen den Gasdiffusionslagen 11 ;15 ein Gradientenprofil in Bezug auf das Wasseranziehungsvermögen von Ionomeren erstreckt. Hierfür können Ionomere mit unterschiedlichen Gehalten an aciden Gruppen, insbesondere mit unterschiedlichen EW-Werten, verwendet werden. Das Gradientenprofil ist derart ausgebildet, dass das Wasseranziehungsvermögen der Ionomere von der Anodenseite zur Kathodenseite abnimmt. Beispielsweise kann die Anode 12 ein Ionomer mit einem EW-Wert von ca. 800, eine anodenseitig erste Membranschicht ebenfalls ein Ionomer mit einem EW-Wert von ca. 800, eine darauf folgende zweite Membranschicht ein lonomer mit einem EW-Wert von ca. 900 und die Kathode 14 ein Ionomer mit einem EW-Wert von ca. 1000 aufweisen.

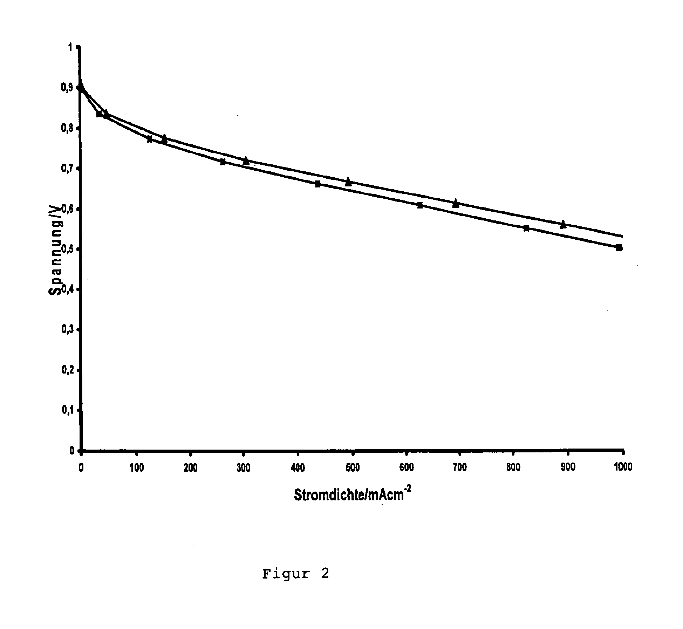

Figur 2 zeigt schematisch die Spannung-Stromdichte-Kennkurve (y-Achse: Spannung, x-Achse: Stromdichte) einer Membran-Elektroden-Einheit (MEA) mit einem Gradientenprofil (Kurve mit den Dreiecksymbolen) und einer Membran-Elektroden-Einheit (MEA) ohne Gradientenprofil (Kurve mit den quadratförmigen Symbolen). Die Gradienten-MEA ist folgendermaßen zusammengesetzt: die Anode weist ein lonomer mit einem Äquivalentgewicht (EW) an aciden Gruppen von ca. 800, bezogen auf das lonomer, auf. Die Protonen leitende Membran hat eine Dicke von ca. 50 µm, wobei sich auf der Seite zur Anode eine ca. 25 µm lonomermembranschicht mit einem EW-Wert von ca. 900 und auf der Seite zur Kathode eine ca. 25 µm lonomermembranschicht mit einem EW-Wert von ca. 1000 befindet, bezogen auf das lonomer. Die Kathode weist ein lonomer mit einem EW-Wert an aciden Gruppen von ca. 1000 auf, bezogen auf das lonomer. Als Referenz wurde eine MEA mit einem konstanten Äquivalentgewicht (EW) an aciden Gruppen von ca. 900, bezogen auf das lonomer, verwendet. In der Figur 2 ist die Polarisationskurve beider MEAs zu sehen. Gemessen wurde bei einer Temperatur von etwa 80°C und voll befeuchteten Gasen. Als Oxidationsmittel wurde auf der Kathodenseite Luft mit einem Überdruck von 0,5 bar und einer Stöchiometrie von 2,5 verwendet. Als Anodengas wurde Wasserstoff mit einem Überdruck von 0,5 bar und einer Stöchiometrie von 1,5 verwendet. Aus der Figur 2 wird deutlich, dass die Ausbildung eines Gradientenprofils zu einer Anhebung der Leistung der MEA und damit der Brennstoffzelle insgesamt führt.

## Patentansprüche

1. Brennstoffzelle mit Elektroden in Form einer Anode und einer Kathode, zwischen denen eine Protonen leitende Membran aus einem acide Gruppen aufweisenden Ionomer angeordnet ist, die Wasser anzuziehen vermag, das an die aciden Gruppen bindet, wobei das Ionomer ausgewählt ist aus der Gruppe sulfonierte Polysulfone, sulfonierte Polysulfidsulfone, sulfonierte Polyetherketone, sulfonierte Polyetheretherketone, sulfonierte Polyetherketonketone, sulfonierte Polyetheretherketonketone und Kombinationen davon, oder das Ionomer ein Perfluorosulfonsäurepolymer ist, **dadurch gekennzeichnet, dass** zwischen dem Bereich der Anode und dem Bereich der Kathode ein Gradientenprofil in Bezug auf das Wasseranziehungsvermögen des Ionomers ausgebildet ist, derart, dass das Wasseranziehungsvermögen im Anodenbereich größer ist als im Kathodenbereich, wobei das Gradientenprofil, ausgedrückt in Äquivalentgewichten (EW) an aciden Gruppen, eine Äquivalentsgewichtsdifferenz von mindestens 10%, bezogen auf das Ionomer mit niedrigerem Äquivalentgewicht, aufweist.

2. Brennstoffzelle nach Anspruch 1, **dadurch gekennzeichnet, dass** die aciden Gruppen Sulfonsäuregruppen sind.

3. Brennstoffzelle nach Anspruch 1 oder 2, **dadurch gekennzeichnet, dass** in die Membran, insbesondere in deren unterschiedliche Schichten, Metallkomplexe integriert sind, welche durch katalytische Wirkung eine zusätzliche Wassererzeugung katalysieren, wobei die Metallkomplexe Platin, Ruthenium, Nickel, Kobalt, Chrom oder Gemische davon aufweisen.

4. Brennstoffzelle nach Anspruch 3, **dadurch gekennzeichnet, dass** die Metallkomplexe kovalent an die Polymermoleküle des lonomers gebunden sind.

5. Brennstoffzelle nach einem der vorhergehenden Ansprüche, **dadurch gekennzeichnet, dass** die Elektroden Katalysatorpartikel aufweisen, die in ein lonomer eingebettet sind und das lonomer der Anode ein größeres Wasseranziehungsvermögen besitzt als das Ionomer der Kathode.

6. Brennstoffzelle nach einem der vorhergehenden Ansprüche, **dadurch gekennzeichnet, dass** den Elektroden Gasdiffusionslagen zugeordnet sind und sich das Gradientenprofil zwischen den Gasdiffusionslagen erstreckt.

7. Brennstoffzelle nach Anspruch 6, **dadurch gekennzeichnet, dass** die Gasdiffusionslagen ein poröses Gerüst aus Ionomer aufweisen und das Ionomer der der Anode zugeordneten Gasdiffusionslage ein größeres Wasseranziehungsvermögen besitzt als das Ionomer der der Kathode zugeordneten Gasdiffusionslage.

8. Brennstoffzelle nach einem der vorhergehenden Ansprüche, **dadurch gekennzeichnet, dass** das Gradientenprofil eine Äquivalentsgewichtsdifferenz von mindestens 20 %, bezogen auf das Ionomer mit niedrigerem Äquivalentgewicht, aufweist.

## Claims

1. Fuel cell having electrodes in the form of an anode and a cathode, between which is disposed a proton-conducting membrane composed of an ionomer which has acidic groups and is capable of attracting water which binds to the acidic groups, the ionomer being selected from the group of sulphonated polysulphones, sulphonated polysulphide sulphones, sulphonated polyether ketones, sulphonated polyether ether ketones, sulphonated polyether ketone ketones, sulphonated polyether ether ketone ketones and combinations thereof, or the ionomer is a perfluorosulphonic acid polymer, **characterized in that** a gradient profile in relation to the water attraction capacity of the ionomer is formed between the region of the anode and the region of the cathode, in such a way that the water attraction capacity in the anode region is greater than in the cathode region, where the gradient profile, expressed in equivalent weights (EW) of acidic groups, has an equivalent weight differential of at least 10%, based on the ionomer having the lower equivalent weight.

2. Fuel cell according to Claim 1, **characterized in that** the acidic groups are sulphonic acid groups.

3. Fuel cell according to Claim 1 or 2, **characterized in that** metal complexes have been integrated into the membrane, especially into the different layers thereof, said metal complexes catalysing additional production of water by catalytic action, where the metal complexes include platinum, ruthenium, nickel, cobalt, chromium or mixtures thereof.

4. Fuel cell according to Claim 3, **characterized in that** the metal complexes are bound covalently to the polymer molecules of the ionomer.

5. Fuel cell according to any of the preceding claims, **characterized in that** the electrodes include catalyst particles embedded into an ionomer and the ionomer of the anode has a greater water attraction capacity than the ionomer of the cathode.

6. Fuel cell according to any of the preceding claims, **characterized in that** the electrodes are provided with gas diffusion layers and the gradient profile extends between the gas diffusion layers.

7. Fuel cell according to Claim 6, **characterized in that** the gas diffusion layers have a porous framework composed of ionomer and the ionomer of the gas diffusion layer assigned to the anode has a greater water attraction capacity than the ionomer of the gas diffusion layer assigned to the cathode.

8. Fuel cell according to any of the preceding claims, **characterized in that** the gradient profile has an equivalent weight differential of at least 20%, based on the ionomer having the lower equivalent weight.

## Revendications

1. Pile à combustible présentant des électrodes sous forme d'une anode et d'une cathode, entre lesquelles est disposée une membrane guidant les protons, constituée par un ionomère présentant des groupes acides, qui est capable d'attirer l'eau, qui se lie aux groupes acides, l'ionomère étant choisi dans le groupe des polysulfones sulfonées, des polysulfure-sulfones sulfonées, des polyéthercétones sulfonées, des polyétheréthercétones sulfonées, des polyéthercétonecétones sulfonées, des polyétheréthercétonecétones sulfonées et leurs combinaisons, ou l'ionomère étant un polymère d'acide perfluorosulfonique, **caractérisée en ce qu'**un profil à gradient, par rapport au pouvoir attracteur de l'eau de l'ionomère, est réalisé entre la zone de l'anode et la zone de la cathode, de manière telle que le pouvoir attracteur de l'eau dans la zone de l'anode est supérieur à celui dans la zone de la cathode, le profil à gradient, exprimé en poids équivalents (PE) de groupes acides, présentant une différence de poids équivalents d'au moins 10%, par rapport à l'ionomère présentant le poids équivalent le plus bas.

2. Pile à combustible selon la revendication 1, **caractérisée en ce que** les groupes acides sont des groupes acide sulfonique.

3. Pile à combustible selon la revendication 1 ou 2, **caractérisée en ce que** des complexes métalliques sont intégrés dans la membrane, en particulier dans ses différentes couches, qui catalysent une production supplémentaire d'eau par effet catalytique, les complexes métalliques présentant du platine, du ruthénium, du nickel, du cobalt, du chrome ou des mélanges de ceux-ci.

4. Pile à combustible selon la revendication 3, **caractérisée en ce que** les complexes métalliques sont liés par covalence aux molécules polymères de l'ionomère.

5. Pile à combustible selon l'une quelconque des revendications précédentes, **caractérisée en ce que** les électrodes présentent des particules de catalyseur, qui sont incorporées dans un ionomère et l'ionomère de l'anode présente un pouvoir attracteur de l'eau supérieur à celui de l'ionomère de la cathode.

6. Pile à combustible selon l'une quelconque des revendications précédentes, **caractérisée en ce que** des couches de diffusion de gaz sont associées aux électrodes et le profil à gradient s'étend entre les couches de diffusion de gaz.

7. Pile à combustible selon la revendication 6, **caractérisée en ce que** les couches de diffusion de gaz présentent une structure poreuse en ionomère et l'ionomère de la couche de diffusion de gaz associée à l'anode présente un pouvoir attracteur de l'eau supérieur à celui de l'ionomère de la couche de diffusion de gaz associée à la cathode.

8. Pile à combustible selon l'une quelconque des revendications précédentes, **caractérisée en ce que** le profil à gradient présente une différence de poids équivalents d'au moins 20%, par rapport à l'ionomère présentant le poids équivalent le plus bas.
